# EUROPEAN PATENT SPECIFICATION

(11) **EP 1 798 917 B1**
(45) Date of publication and mention of the grant of the patent: **13.10.2010**
(21) Application number: 05301072.4
(22) Date of filing: 19.12.2005
(51) Int. Cl.: H04L 12/64, H04L 12/40

(54) **Method of passing a constant bit rate digital signal through an ethernet interface and system for carrying out the method**
Verfahren zum Durchreichen eines Signals mit konstanter Bitrate über einen Ethernet-Anschluss und System zur Ausführung des Verfahrens
Procédé pour le passage d'un signal à débit binaire constant par un interface ethernet et système mettant en oeuvre ce procédé

(43) Date of publication of application: 20.06.2007
(73) Proprietor: Alcatel Lucent, 75008 Paris (FR)
(72) Inventor: Gerosa, Marzio, 20059, Vimercate (IT)
(74) Representative: Shamsaei Far, Hassan

(56) References cited:
- WO-A-02/091642
- US-A1- 2004 010 729
- US-A1- 2004 062 278
- ANIRUDHAN P N ET AL: "High quality packet video terminal" GLOBAL TELECOMMUNICATIONS CONFERENCE, 1997. GLOBECOM '97., IEEE PHOENIX, AZ, USA 3-8 NOV. 1997, NEW YORK, NY, USA,IEEE, US, vol. 2, 3 November 1997 (1997-11-03), pages 730-735, XP010254699 ISBN: 0-7803-4198-8

## Description

The present invention relates to digital communication within a network in which Ethernet is used. In particular the invention relates to a solution for passing a constant bit rate digital signal through an Ethernet interface in a point to point communication environment.

### BACKGROUND OF THE INVENTION

In general terms, constant bit rate (CBR) refers to a technique of transmitting data streams at a traffic speed that does not change through the time of transmission. The bit rate at transmission end must be the same as the bit rate at reception end. Therefore in order to fulfill this requirement, the task of maintaining the bit rate at a constant level is of importance.

On the other hand, Ethernet is a widely used local area network architecture the specification of which has been defined under IEEE Standard 802.3. Various data transfer rate modalities are known for Ethernet such as the 10 Mbit/s which is the basic data rate, the 100 Mbit/s which is generally known as Fast Ethernet and 1000 Mbit/s generally known as Gigabit Ethernet.

In certain applications such as for example in new generation digital telecommunication equipment which in addition to the usual CBE signals deal with data, a CBR signal may need to be transmitted through a data Ethernet interface. When this is the case, it is needed that some sort of control over the bit rate is provided so that the same bit rate which is generated at the transmission point is available at the reception point.

A known solution for recovering at reception point the same bit rate as generated at transmission point is based on using protocols such as the so-called Pseudo Wire Emulation Edge-to-Edge (PWE3, IETF RFC 3985) and using Real Tile Protocol (RTP, IETF RFC 3550) in order to recover at the reception point, the original clock rate at transmission point. These known solutions are satisfactory when applied to packet switched networks, but they are too complex for use in a simple point to point Ethernet connection where packet switching is absent. Furthermore, a common clock at each end is needed where the maintenance of the signal rate at a constant speed is not guaranteed.

It is therefore desired to provide a solution for passing CBR through an Ethernet interface that would overcome, or substantially reduce the above drawbacks.

WO 02/091642 discloses a method and a system for use in communicating data between a time division multiplexing (TDM) network and a packet based network. A clock signal is derived from data packets containing data originally transmitted over the TDM network. Outgoing TDM data is obtained using the data packets and the clock signal. The outgoing TDM data has timing characteristics of the data originally transmitted over the TDM network. Data extracted from the data packets may be collected in a FIFO and the clock signal may be derived in part from fill level information for the FIFO.

The paper "High Quality Packet Video Terminal" by P. N. Anirudhan et al., Global Communication Conference 1997, Globecom '97, IEEE, Phoenix, AZ, USA 3-8 Nov. 1997, New York, NY, USA, IEEE US vol. 2, 3 November 1997, pages 730-735 discloses the design of a terminal capable of supporting high quality packet video applications in real time.

### DESCRIPTION OF THE INVENTION

The above objective is achieved by using the solution proposed by the present invention described hereinbelow.

One characteristic of Ethernet transmission is that it is independent of the clocking rate with which it is transmitted, meaning that the transmission may be performed at any convenient clock domain. The invention in its broadest aspect takes advantage of this fact and uses a clock domain based on the original clock rate of the CBR signal for transmitting CBR in Ethernet packets through the Ethernet environment. At destination, the received clock rate is recovered thus recovering with it the original clock rate of the CBR.

In transmission, the original constant bit rate signal is fragmented and inserted into packets. In the following description, this process is referred to as "packaging" and the unit used for performing the process is referred to as "packaging" and the unit used for performing the process is referred to as "packager".

In reception, on the contrary, the Ethernet packets are broken into fragments. In the following, this process of breaking the packet into fragments is referred to as "de-packaging" and the corresponding unit for performing it is referred to as "de-packager".

Thus, by packaging it is meant that the constant bit rate signal, which originally is in the form of a stream of data bits, is broken into fragments of bits and a standard Ethernet header is added to each fragment in order to form a standard Ethernet packet. The resulting packet is transmitted at a clock rate which is locked to the original clock rate of the constant bit rate signal. The resulting standard Ethernet packets then pass through Ethernet interface blocks and are transmitted with the locked clock rate.

In reception, clock recovery is performed and the recovered clock is used for locking a phase locked loop (PLL) at the nominal frequency of the original clock rate of the signal. The Ethernet packets received are then broken and the associated Ethernet headers are eliminated. In this manner the fragments of the original constant bit rate signal are recovered. These fragments are stored in a buffer and can be read at the rate of the PLL which, as stated above, is locked to the original clock rate.

Accordingly, one object of the present invention is providing a method for transmitting/receiving a constant bit rate signal through an Ethernet interface wherein fragments of the constant bit rate signal are framed into Ethernet packets, the constant bit rate signal having an original clock rate, wherein the transmission of the Ethernet packets containing fragments of the constant bit rate signal is made using a clock domain locked to the original clock rate of the CBR signal and the reception of the Ethernet packets containing the constant bit rate signal is made using a clock domain based on the original clock rate of the CBR signal, the method being **characterized in that** it comprises, in transmission:
a) transmitting the Ethernet packets at a clock rate which is locked by a phase locked loop to the original clock rate of the constant bit rate signal,
   the method being further **characterized in that** it comprises, in reception:
b) recovering fragments of the constant bit rate signal from received Ethernet packets and storing the fragments in a buffer;
c) recovering a clock rate from the received Ethernet packets and locking a further phase locked loop, with a nominal frequency equal to the original clock rate, to the recovered clock rate; and
d) reading the fragments from the buffer at the rate of the further phase locked loop locked to said recovered clock rate.

According to another object of the present invention, there is provided a system for transmitting/receiving a constant bit rate signal through an Ethernet interface wherein fragments of the constant bit rate signal are framed by means of a packager into Ethernet packets, the constant bit rate signal having an original clock rate, the system being according to claim 4.

Preferably, the packager is adapted for transmitting an Ethernet packet containing a fragment of the constant bit rate signal and an associated Ethernet header, and wherein at transmission said system further comprises a phase locked loop circuit for clocking said transmission of Ethernet packet at a rate locked to the original clock rate of the constant bit rate signal.

Preferably, the de-packager is adapted for breaking the Ethernet packet received and eliminating an associated Ethernet header thus recovering the fragment of the constant bit rate signal; and wherein said system further comprises a clock data recovery device for recovering the clock rate of the received packet, a phase locked loop circuit for locking at a nominal frequency of the original clock rate of the signal using the recovered clock rate, and storage means for storing the fragment recovered where said fragment is read at the rate of the phase locked loop locked to said original clock rate.

A further object of the present invention is that of providing a transmitter for use in the system of the present invention.

A still further object of the present invention is that of providing a receiver for use in the system of the present invention.

These and further features and advantages of the present invention are explained in more detail in the following description as well as in the claims with the aid of the accompanying drawings.

### BRIEF DESCRIPTION OF THE DRAWINGS

Figure 1 is a schematic block diagram representation of an exemplary embodiment of a system for transmitting/receiving a constant bit rate signal through an Ethernet interface according to the present invention.
Figure 2 is a schematic representation of packaging procedure of a constant bit rate signal into Ethernet packets for use in the system of the present invention.

### EXAMPLE OF A PREFERRED EMBODIMENT

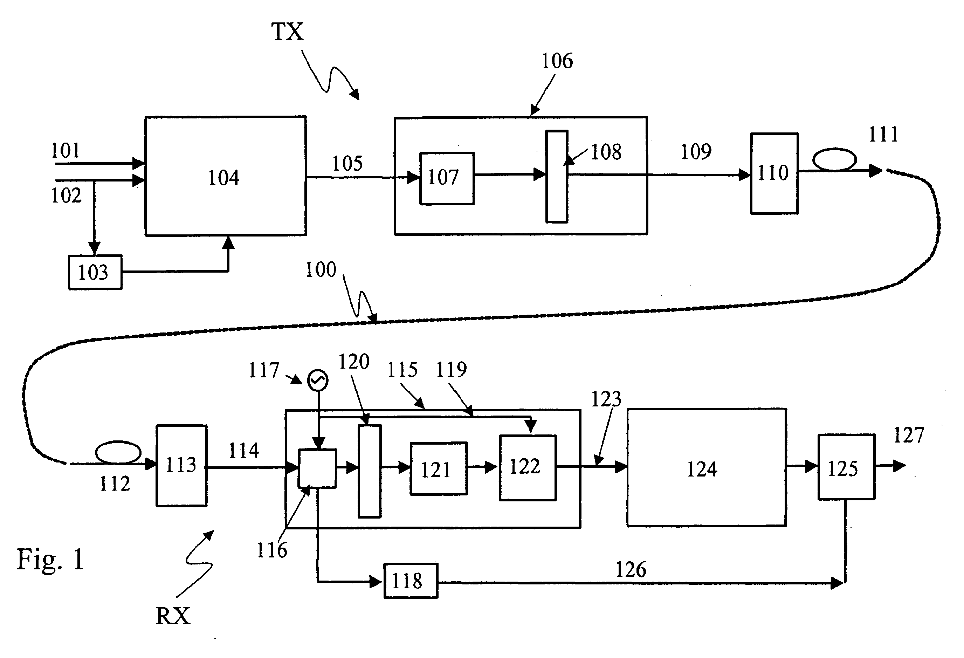

In figure 1 an exemplary block diagram of a system for transmitting/receiving a constant bit rate signal having an original clock rate, through an Ethernet interface according to the present invention is shown representing only those parts of the system which are considered helpful for a better understanding of the invention, other parts not shown and known by a person skilled in the related art being considered not relevant for this purpose. In this figure, the upper line of elements shown by the general reference sign TX are related to transmission, and the lower line of elements, shown by the general reference sign RX are related to reception.

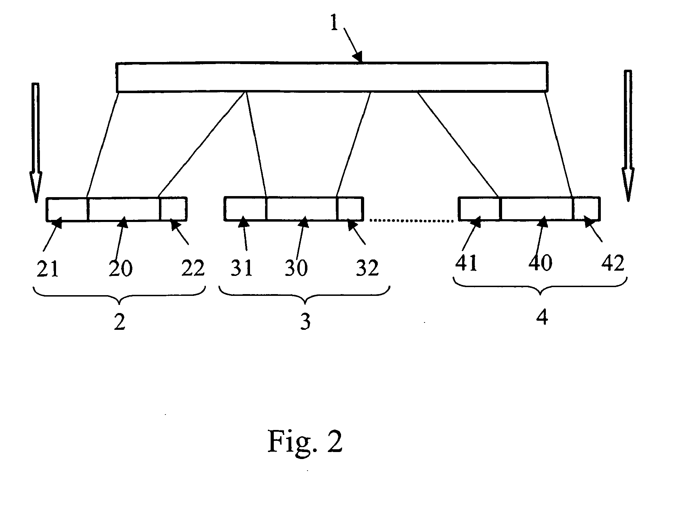

Thus in transmission stage TX, an input signal 101 is shown which is assumed to represent a constant bit rate signal. The signal has an original clock rate, shown by arrow 102. The CBR signal is thus fed into a packager 104. The packager 104 is in charge of breaking the CBR signals into fragments and forming standard Ethernet packets corresponding to each fragment. The process of breaking the CBR signals and forming standard Ethernet packets is schematically shown in figure 2.

In figure 2 a CBR signal is represented by a single block 1, however it is understood that this block contains a stream of data bits which travel at a constant rate. The CBR signal 1 is then broken (or divided) into fragments 20, 30, 40. Then a standard Ethernet header 21, 31, 41 is added to each respective fragment 20, 30, 40. Using the fragment obtained together with the associated Ethernet header, a standard Ethernet packet may be obtained in which the fragment 20, 30, 40 occupies the payload part of the Ethernet packet. Additional characters or symbols, as conventionally needed in order to complete the standard Ethernet packet, for example a frame check sequence for controlling errors are also included in an appropriate part of the Ethernet packet. This additional part is represented by reference numerals 22, 32 and 42 in each packet. The resulting Ethernet packets are shown in figure 2 by reference numerals 2, 3 and 4.

A typical component for performing the packaging operation may be any digital programmable device such as for example the so-called Field Programmable Gate Array (FPGA) or Electrically Programmable Logical Device (EPLD).

Once the Ethernet packets 2, 3, 4 are formed by the packager 104, they are output from the latter. According to the invention and referring back to figure 1, the output signal 105 is clocked at a clock rate which is locked to the original clock rate of the CBR signal. In order to achieve this, the original clock rate 102 of the CBR signal is fed to a PLL 103. The PLL 103 uses this bit rate in order to generate a clock signal which is then used as clock for the output signal 105. In this manner, the CBR signal, structured into standard Ethernet packets is suitable for passing through the rest of the elements of transmission while at the same time it maintains a clock rate based on the original clock rate of the CBR.

Next the packets pass through an Ethernet interface unit 106 which may be a conventional unit such as the so-called PHY transmit device (PHY referring to the fact that the interface is related to the physical layer in the OSI layer definition). The interface unit 106 may comprise a coder 107 in order to code the received packets according to a suitable line code, for example the 8b/10b coding for a Gigabit Ethernet application. The interface unit 106 may also comprise a parallel input-serial output (PISO) device 108 in order to generate a serial signal 109 to be output from the interface unit 106. The output signal 109 is then fed to another conventional Ethernet interface device 110 such as the so-called Line Unit Interface (LUI) which in case of use in optical Gigabit Ethernet application may be a Small Form-Factor Pluggable (SFP) which is an optical interface in the form of a transceiver. The output signal 111 thus generated is finally transmitted through the transmission line 100 to the destination point.

In reception RX, at the destination point the signal 111 is received at an input port of a conventional Ethernet LUI device 113 such an SFP (in case of an optical Gigabit Ethernet application) as described above (it is to be noted that LUIs may operate bi-directionally) and a serial interface signal 114 is output from the latter and fed into a second conventional Ethernet interface unit 115 which in this case may be a PHY receive device, also known in the art. In the second interface unit 115, the clock of the received signal is recovered by a clock data recovery device 116. The recovered clock is then fed into a PLL 118, the use of which is described further below.

On the other hand, the clock data recovery device 116 uses a reference clock 117 in order to clock the output of the interface unit 115 as shown by arrow 119.

The serial signal output from the clock data recovery device 116 is fed into a serial input - parallel output (SIPO) device 120 which generates a parallel signal of ten bits to be input into a decoder 121 which is in charge of decoding the received signals, according to a suitable line code, for example the 8b/10b coding for a Gigabit Ethernet application.

The resulting signal is fed into a first input - first output (FIFO) unit 122 which then send the packets 123 to a de-packager 124.

The de-packager 124 is in charge of breaking the Ethernet packets received and eliminating the Ethernet header associated to each packet (21, 31, 41 in figure 2) thus recovering the fragments of the original CBR signal (20, 30, 40 in figure 2).

Here also, in a similar manner as discussed in relation to the packager, a typical component for performing the de-packaging operation may be any digital programmable device such as for example the so-called Field Programmable Gate Array (FPGA) or Electrically Programmable Logical Device (EPLD).

Once the fragments are available, it is needed to assemble the fragments back together in order to reconstruct the CBR signal. In order to do this, the fragments obtained are stored in an elastic memory 125 such as a buffer. The fragments are then read from the buffer at a rate triggered by the PLL 118 which is sent to the buffer as shown by arrow 126. As mentioned above, the PLL 118 is locked at the nominal frequency of the original clock rate of the CBR.

The resulting signal 127 is thus a CBR signal duly recovered based on the original clock rate of the input CBR 101.

It is to be noted that the choice of interface units 106, 110, 113 and 115 is mentioned in this description as examples for the case of optical Gigabit Ethernet application, in order to provide a better understanding of the invention, and the invention is not to be construed as being limited to the examples given.

It is further to be noted that due to the high capacity of the Ethernet (up to 1 Gb/s), in addition to the standard Ethernet packets as discussed above, additional Ethernet packets (containing different information as compared to the fragments of the original CBR) may be transmitted as well, sharing the same physical connection.

It is therefore appreciated that the recovery of the CBR is achieved by means of a very simple circuitry and by using Ethernet devices which are easily available on the market at relatively low costs.

## Claims

1. Method for transmitting/receiving a constant bit rate signal (101) through an Ethernet interface (110,113) wherein fragments of the constant bit rate signal (101) are framed into Ethernet packets (105, 123), the constant bit rate signal (101) having an original clock rate, wherein the transmission of the Ethernet packets (105) containing the fragments of the constant bit rate signal (101) is made using a clock domain based on the original clock rate of the constant bit rate signal (101), and the reception of the Ethernet packets (123) containing the fragments of the constant bit rate signal (101) is made using a clock domain locked to the original clock rate of the constant bit rate signal (101), the method being **characterized in that** it comprises, in transmission:
a) transmitting said Ethernet packets (105) at a clock rate which is locked by a phase locked loop (103) to the original clock rate of said constant bit rate signal (101),
the method being further **characterized in that** it comprises, in reception:
b) recovering fragments of the constant bit rate signal from received Ethernet packets (123) and storing said fragments in a buffer (125);
c) recovering a clock rate from the received Ethernet packets (123) and locking a further phase locked loop (118), having nominal frequency equal to said original clock rate, to said recovered clock rate; and
d) reading said fragments from said buffer (125) at a rate of said further phase locked loop (118) locked to said recovered clock rate.

2. Method according to claim 1, further comprising the steps of:
in transmission:
- transmitting an Ethernet packet (2, 3, 4) containing a fragment (20, 30, 40) of the constant bit rate signal (101) and an associated Ethernet header (21,31,41);
- clocking said transmission of the Ethernet packet (2, 3, 4) at a rate locked to the original clock rate of the constant bit rate signal (101).

3. Method according to claim 1 or 2, further comprising the steps of:
in reception:
- breaking the Ethernet packet (2, 3, 4) received and eliminating the associated Ethernet header (21, 31, 41) thus recovering the fragment (20, 30, 40) of the constant bit rate signal (101);
- recovering the clock rate of the received packet (2, 3, 4);
- locking a phase locked loop circuit (118), with a nominal frequency equal to the original clock rate, to the recovered clock rate; and
- reading the fragment (20, 30, 40) recovered at the rate of said phase locked loop (118) locked to said recovered clock rate.

4. System (TX, RX) for transmitting/receiving a constant bit rate signal (101) through an Ethernet interface (110, 113) wherein fragments of the constant bit rate signal (101) are framed into Ethernet packets (105, 123), the constant bit rate signal (101) having an original clock rate, said system being **characterized in that** it comprises:
- a transmitter (TX) comprising a packager (104) adapted for transmitting the Ethernet packets (105) containing fragments of the constant bit rate signal (101) at a clock rate which is locked by a phase locked loop (103) to the original clock rate of the constant bit rate signal (101); and
- a receiver (RX) comprising a de-packager (124) adapted for receiving Ethernet packets (123), for recovering fragments of the constant bit rate signal (101) from the received Ethernet packets (105) and for storing said fragments in a buffer (125), said receiver (RX) being suitable for recovering a clock rate from said received Ethernet packets (123), locking a further phase locked loop (118) having nominal frequency equal to said original clock rate to said recovered clock rate, and reading said fragments from said buffer (125) at a rate of said further phase locked loop (118) locked to said recovered clock rate.

5. System (TX, RX) according to claim 4 wherein the packager (104) is adapted for transmitting an Ethernet packet (2, 3, 4) containing a fragment (20, 30, 40) of the constant bit rate signal (101) and an associated Ethernet header (21, 31, 41), and wherein at transmission said system further comprises a phase locked loop circuit (103) for clocking said transmission of Ethernet packet (2, 3, 4) at a rate locked to the original clock rate of the constant bit rate signal (101).

6. System (TX, RX) according to claims 4 or 5 wherein the de-packager (124) is adapted for breaking the Ethernet packet (2, 3, 4) received and eliminating an associated Ethernet header (21, 31, 41) thus recovering the fragment (20, 30, 40) of the constant bit rate signal (101); and wherein said system further comprises a clock data recovery device (116) for recovering the clock rate of the received packet, a phase locked loop circuit (118) for locking at a nominal frequency of the original clock rate of the signal using the recovered clock rate, and storage means (125) for storing the fragment (20, 30, 40) recovered where said fragment (20, 30, 40) is read at the rate of the phase locked loop (118) locked to said original clock rate.

7. Transmitter (TX) for use in any one of the systems according to claim 4-6.

8. Receiver (RX) for use in any one of the systems according to claims 4-6.

## Patentansprüche

1. Verfahren zum Übertragen/Empfangen eines Signals mit konstanter Bitrate (101) über eine Ethernet-Schnittstelle (110,113), wobei Fragmente des Signals mit konstanter Bitrate (101) in Ethernet-Pakete (105, 123) gerahmt werden, wobei das Signal mit konstanter Bitrate (101) eine ursprüngliche Taktrate aufweist, wobei die Übertragung der Ethernet-Pakete (105), welche die Fragmente des Signals mit konstanter Bitrate (101) enthalten, unter Verwendung einer Taktdomäne auf der Basis der ursprünglichen Taktrate des Signals mit konstanter Bitrate (101) erfolgt, und der Empfang der Ethernet-Pakete (123), welche die Fragmente des Signals mit konstanter Bitrate (101) unter Verwendung einer auf die ursprüngliche Taktrate des Signals mit konstanter Bitrate (101) festgesetzten Taktdomäne erfolgt, wobei das Verfahren **dadurch gekennzeichnet ist, dass** es im Übertragungsmodus umfasst:
a) Übertragen der besagten Ethernet-Pakete (105) bei einer Taktrate, welche von einer Phasenregelschleife (103) auf die ursprüngliche Taktrate des besagten Signals mit konstanter Bitrate (101) festgesetzt ist,
wobei das Verfahren weiterhin **dadurch gekennzeichnet ist, dass** es im Empfangsmodus umfasst:
b) Ruckgewinnen der Fragmente des Signals mit konstanter Bitrate aus den empfangenen Ehternet-Paketen (123) und Speichern der besagten Fragmente in einem Pufferspeicher (125);
c) Rückgewinnen einer Taktrate aus den empfangenen Ethernetpaketen (123) und Festsetzen einer weiteren Phasenregelschleife (118), deren Nennfrequenz der besagten ursprünglichen Taktrate entspricht, auf die besagte rückgewonnene Taktrate; und
d) Auslesen der besagten Fragmente aus dem besagten Pufferspeicher (125) bei einer Rate der besagten auf der besagten rückgewonnenen Taktrate festgesetzten weiteren Phasenregelschleife (118).

2. Verfahren nach Anspruch 1, weiterhin die folgenden Schritte umfassend:
In Übertragungsmodus:
- Übertragen eines Ethemet-Pakets (2, 3, 4), welches ein Fragment (20, 30, 40) des Signals mit konstanter Bitrate (101) und einen zugehörigen Ethernet-Kopfteil (21, 31, 41) enthält;
- Takten der besagten Übertragung des Ethernet-Pakets (2, 3,4) bei einer auf der ursprünglichen Taktrate des Signals mit konstanter Bitrate (101) festgesetzten Rate.

3. Verfahren nach Anspruch 1 oder 2, weiterhin umfassend die folgenden Schritte:
Im Empfangsmodus:
- Aufbrechen des empfangenen Ethernet-Paketes (2, 3, 4) und Entfernen des zugehörigen Ethernet-Kopfteils (21, 31, 41) zur Rückgewinnung des Fragments (20, 30, 40) des besagten Signals mit konstanter Bitrate (101);
- Rückgewinnen der Taktrate aus dem empfangenen Paket (2, 3, 4);
- Festsetzen einer Phasenregelschleifenschaltung (118) mit einer Nennfrequenz, welche der ursprünglichen Taktrate entspricht, auf die rückgewonnene Taktrate; und
- Auslesen des rückgewonnenen Fragments (20, 30, 40) bei der Rate der besagten Phasenregelschleife (118), welche auf die besagte rückgewonnene Taktrate festgesetzt ist.

4. System (TX, RX) zum Übertragen/Empfangen eines Signals mit konstanter Bitrate (101) über eine Ethernet-Schnittstelle (110, 113), wobei Fragmente des Signals mit konstanter Bitrate (101) in Ethernet-Pakete (105, 123) gerahmt werden, wobei das Signal mit konstanter Bitrate (101) eine ursprüngliche Taktrate aufweist, wobei das System **dadurch gekennzeichnet ist, dass** es umfasst.
- Einen Sender (TX) mit einer Verpackvorrichtung (104), welcher für das Übertragen der Ethernet-Pakete (105), welche Fragmente des Signals mit konstanter Bitrate (101) enthalten, bei einer Taktrate, die durch eine Phasenregelschleife (103) auf die ursprüngliche Taktrate des Signals mit konstanter Taktrate (101) festgesetzt ist, ausgelegt ist; und
- einen Empfänger (RX) mit einer Auspackvorrichtung (124), welcher für den Empfang von Ethernet-Paketen (123), für das Rückgewinnen von Fragmenten des Signals mit konstanter Bitrate (101) aus den empfangenen Ethernet-Paketen (105) und für das Speichern der besagten Fragmente in einem Pufferspeicher (125) ausgelegt ist, wobei der besagte Empfänger (RX) dazu ausgelegt ist, eine Takirate aus den besagten Ethernet-Paketen (123) rückzugewinnen, eine weitere Phasenregelschleife (118), deren Nennfrequenz der ursprünglichen Taktrate entspricht, auf die besagte rückgewonnene Taktrate festzusetzen, und die besagten Fragmente aus dem besagten Pufferspeicher (125) bei einer Rate der besagten weiteren Phasenregelschleite (118), welche auf die besagte rückgewonnene Taktrate festgelegt ist, auszulesen.

5. System (TX, RX) nach Anspruch 4, wobei die Verpackvorrichtung (104) dazu ausgelegt ist, ein Ethernet-Paket (2, 3, 4), welches ein Fragment (20, 30, 40) des Signals mit konstanter Bitrate (101) und einen zugehörige Ethernet-Kopfteil (21, 31, 41) enthält, zu übertragen, und wobei das System im Übertragungsmodus weiterhin eine Phasenregelschleifenschaltung (103) zum Takten der besagten Übertragung eines Ethernet-Paketes (2, 3, 4) bei einer auf die ursprüngliche Taktrate des Signals mit konstanter Bitrate (101) festgelegten Rate umfasst.

6. System (TX, RX) nach Anspruch 4 oder 5, wobei die Auspackvorrichtung (124) dazu ausgelegt ist, das empfangene Ethernet-Paket (2, 3, 4) aufzubrechen und einen zugehörigen Ethernet-Kopfteil (21, 31, 41) zu entfernen und dadurch das Fragment (20, 30, 40) des Signals mit konstanter Bitrate (101) rückzugewinnen; und wobei das besagte System weiterhin eine Taktdatenrückgewinnungsvorrichtung (116) zum Rückgewinnen der Taktrate des empfangenen Paketes, eine Phasenregelschleifenschaltung (118) zum Festsetzen einer Nennfrequenz der ursprünglichen Taktrate des Signals unter Verwendung der rückgewonnenen Taktrate, und Speichermittel (125) zum Speichern des rückgewonnenen Fragments (20, 30, 40) umfasst, wobei das besagte Fragment (20, 30, 40) bei der Rate der auf die ursprüngliche Taktrate festgesetzten Phasenregelschleife (118) ausgelesen wird.

7. Sender (TX) zur Verwendung in einem beliebigen der Systeme gemäß den Ansprüchen 4-6.

8. Empfänger (RX) zur Verwendung in einem beliebigen der Systeme gemäß den Ansprüchen 4-6.

## Revendications

1. Procédé pour émettre/recevoir un signal à débit binaire constant (101) via une interface Ethernet (110, 113) dans lequel des fragments du signal à débit binaire constant (101) sont intégrés dans des paquets Ethernet (105, 123), le signal à débit binaire constant (101) ayant une fréquence d'horloge d'origine, dans lequel l'émission des paquets Ethernet (105) contenant les fragments du signal à débit binaire constant (101) est réalisée à l'aide d'un domaine d'horloge sur la base de la fréquence d'horloge d'origine du signal à débit binaire constant (101), et la réception des paquets Ethernet (123) contenant les fragments du signal à débit binaire constant (101) est réalisée à l'aide d'un domaine d'horloge verrouillé sur la fréquence d'horloge d'origine du signal à débit binaire constant (101), le procédé étant **caractérisé en ce qu'**il comprend, en émission :
a) émettre lesdits paquets Ethernet (105) à une fréquence d'horloge qui est verrouillée par une boucle à verrouillage de phase (103) sur la fréquence d'horloge d'origine dudit signal à débit binaire constant (101), le procédé étant en outre **caractérisé en ce qu'**il comprend, en réception :
b) récupérer des fragments du signal à débit binaire constant à partir des paquets Ethernet reçus (123), et stocker lesdits fragments dans une mémoire tampon (125);
c) récupérer une fréquence d'horloge à partir des paquets Ethernet (123) reçus, et verrouiller une boucle à verrouillage de phase (118) supplémentaire, ayant une fréquence nominale égale à ladite fréquence d'horloge d'origine, sur ladite fréquence d'horloge récupérée ; et
d) lire lesdits fragments à partir de ladite mémoire tampon (125) à une fréquence de ladite boucle à verrouillage de phase (118) supplémentaire, verrouillée sur ladite fréquence d'horloge récupérée.

2. Procédé selon la revendication 1 , comprenant en outre les étapes de :
en émission:
- émettre un paquet Ethernet (2, 3, 4) contenant un fragment (20, 30, 40) du signal à débit binaire constant (101) et un entête Ethernet (21, 31, 41) associé ;
- cadencer ladite émission du paquet Ethernet (2, 3 et 4) à une fréquence verrouillée sur la fréquence d'horloge d'origine du signal à débit binaire constant (101).

3. Procédé selon la revendication 1 ou 2, comprenant en outre les étapes de :
en réception :
- casser le paquet Ethernet (2, 3, 4) reçu, et éliminer l'entête Ethernet (21, 31, 41) associé, pour récupérer le fragment (20, 30, 40) du signal à débit binaire constant (101) ;
- récupérer la fréquence d'horloge du paquet reçu (2, 3, 4)
- verrouiller un circuit de boucle à verrouillage de phase (118), avec une fréquence nominale égale à la fréquence d'horloge d'origine, sur la fréquence d'horloge récupérée ; et
- lire le fragment (20, 30, 40) récupéré à la fréquence de ladite boucle à verrouillage de phase (118) verrouillée sur ladite fréquence d'horloge.

4. Système (TX, RX) pour émettre/recevoir un signal à débit binaire constant (101)
via une interface Ethernet (110, 113), dans lequel des fragments du signal à débit binaire constant (101) sont intégrés dans des paquets Ethernet (105, 123), le signal à débit binaire constant (101) ayant une fréquence d'horloge d'origine, ledit système étant **caractérisé en ce qu'**il comprend :
- un émetteur (TX) comprenant un intégrateur (104) adapté pour émettre les paquets Ethernet (105) contenant des fragments du signal à débit binaire constant (101) à une fréquence d'horloge qui est verrouillée par une boucle à verrouillage de phase (103) sur la fréquence d'horloge d'origine du signal à débit binaire constant (101); et
- un récepteur (RX) comprenant un dés-intégrateur (124) adapté pour recevoir des paquets Ethernet (123), pour récupérer des fragments du signal à débit binaire constant (101) à partir des paquets Ethernet (105) reçus et pour stocker lesdits fragments dans une mémoire tampon (125), ledit récepteur (RX) étant approprié pour récupérer une fréquence d'horloge à partir desdits paquets Ethernet (123) reçus, verrouiller une boucle à verrouillage de phase (118) supplémentaire ayant une fréquence nominale égale à ladite fréquence d'horloge d'origine sur ladite fréquence d'horloge récupérée, et lire lesdits fragments à partir de ladite mémoire tampon (125) à une fréquence de ladite boucle à verrouillage de phase (118) supplémentaire, verrouillée sur ladite fréquence d'horloge récupérée.

5. Système (TX, RX) selon la revendication 4, dans lequel intégrateur (104) est adapté pour émettre un paquet Ethernet (2, 3, 4) contenant un fragment (20, 30, 40) du signal à débit binaire constant (101) et un entête Ethernet (21, 31, 41) associé, et dans lequel lors de l'émission ledit système comprend en outre un circuit de boucle à verrouillage de phase (103) pour cadencer ladite émission de paquet Ethernet (2, 3, 4) à une fréquence verrouillée sur la fréquence d'horloge d'origine du signal à débit binaire constant (101).

6. Système (IX, RX) selon la revendication 4 ou 5 dans lequel le dés-intégrateur (124) est adapté pour casser le paquet Ethernet (2, 3, 4) reçu et éliminer un entête Ethernet (21, 31, 41) associé, pour récupérer le fragment (20, 30, 40) du signal à débit binaire constant (101); et dans lequel ledit système comprend en outre un dispositif de récupération de données d'horloge (116) pour récupérer la fréquence d'horloge du paquet reçu, un circuit de boucle à verrouillage de phase (118) pour verrouiller à une fréquence nominale de la fréquence d'horloge d'origine du signal à l'aide de la fréquence d'horloge récupérée, et des moyens de stockage (125) pour stocker le fragment (20, 30, 40) récupéré, ledit fragment (20, 30, 40) étant lu à la fréquence de la boucle à verrouillage de phase (118) verrouillée sur ladite fréquence d'horloge d'origine.

7. Émetteur (TX) pour une utilisation dans l'un quelconque des systèmes selon les revendications 4 à 6.

8. Rècepteur (RX) pour une utilisation dans l'un quelconque des systèmes selon les revendications 4 à 6.
